# EUROPEAN PATENT APPLICATION

(11) **EP 4 790 815 A1**
(43) Date of publication of application: **12.08.2026**
(21) Application number: 25861709.1
(22) Date of filing: 19.09.2025
(51) Int. Cl.: H01M 50/367, H01M 50/271, H01M 50/383

(54) **BATTERY PACK**

(30) Priority: 19.12.2024 KR 20240191691
(71) Applicant: LG ENERGY SOLUTION, LTD., Seoul 07335 (KR)
(72) Inventor: CHANG, Hyuk Kyun, Daejeon 34122 (KR); KIM, Soo Youl, Daejeon 34122 (KR); PARK, Gi Chan, Daejeon 34122 (KR); CHOI, Beom Seok, Daejeon 34122 (KR)
(74) Representative: Plasseraud IP
(86) International application number: PCT/KR2025/014648
(87) International publication number: WO 2026/134552

(57) **Abstract**

According to exemplary embodiments, a battery pack is provided. The battery pack may include: a bottom plate; a battery cell assembly on the bottom plate including a plurality of battery cells arranged in a first direction; a cover on the battery cell assembly; a venting guide structure including a base sheet on the cover and a venting sheet on the base sheet; and a lid plate on the venting guide structure. The venting guide structure may include: a first venting passage between the base sheet and the venting sheet; and a second venting passage between the venting sheet and the lid plate. The first venting passage and the second venting passage may be separated in the first direction.

## Description

### [Technical Field]

The present disclosure relates to a battery pack. This application claims the benefit of Korean Patent Application No. 10-2024-0191691, filed on December 19, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has been dramatically reduced, and as the driving range of battery electric vehicles (BEVs) has increased to a level equivalent to that of fuel-powered vehicles, the main application of secondary batteries is shifting from mobile devices to mobility.

In the current trend where secondary batteries for mobility are emphasized, the main directions of secondary battery technology development are reducing production costs and improving safety. Secondary batteries account for the largest portion of the manufacturing cost of BEVs. Therefore, the most important factor for increasing the market share of BEVs compared to internal combustion engine vehicles is the production cost of secondary batteries. Cost reduction can be achieved through reduction of raw materials, reduction in the number of production process steps, and reduction of takt time. The safety of secondary batteries is very important as it is directly related to the lives of mobility occupants. A major task for improving the safety of secondary batteries is to provide a solution for preventing thermal runaway of battery packs.

### [Summary]

### [Technical Problem]

The technical problem to be solved by the technical idea of the present disclosure is to provide a battery pack with improved safety.

### [Technical Solution]

According to exemplary embodiments of the present disclosure for solving the above-described problem, a battery pack is provided. The battery pack may include: a bottom plate; a battery cell assembly on the bottom plate including a plurality of battery cells arranged in a first direction; a cover on the battery cell assembly; a venting guide structure including a base sheet on the cover and a venting sheet on the base sheet; and a lid plate on the venting guide structure. The venting guide structure may include: a first venting passage between the base sheet and the venting sheet; and a second venting passage between the venting sheet and the lid plate. The first venting passage and the second venting passage may be separated in the first direction.

Each of the first venting passage and the second venting passage may extend in a second direction that is parallel to a mounting surface of the bottom plate and perpendicular to the first direction.

The cover may include: a plurality of first cover holes arranged in a second direction parallel to a mounting surface of the bottom plate and perpendicular to the first direction; and a plurality of second cover holes arranged in the second direction and spaced apart from the plurality of first cover holes in the first direction.

Each of the plurality of first cover holes may overlap with a corresponding one of the plurality of battery cells in a third direction perpendicular to each of the first and second directions. Each of the plurality of second cover holes may overlap with a corresponding one of the plurality of battery cells in the third direction.

The base sheet may include first communication holes and second communication holes. Each of the first communication holes may overlap with a corresponding one of the first cover holes in a third direction perpendicular to each of the first and second directions. Each of the second communication holes may overlap with a corresponding one of the second cover holes in the third direction.

The venting sheet may include: first venting holes communicating with the first venting passage, and second venting holes communicating with the second venting passage.

Each of the first venting holes may overlap with the base plate between two adjacent ones of the first communication holes in the third direction. Each of the second venting holes may overlap with a corresponding one of the second communication holes in the third direction.

The number of the first venting holes may be different from the number of the second venting holes.

The venting sheet may include: a first portion spaced apart from the base sheet in a direction perpendicular to a mounting surface of the bottom plate; a second portion in contact with the base sheet; and a third portion connecting the first portion and the second portion.

The first venting passage and the second venting passage may be separated in the first direction by the third portion.

The first venting passage may overlap with the first portion in a direction perpendicular to the mounting surface of the bottom plate. The second venting passage may overlap with the second portion in a direction perpendicular to the mounting surface of the bottom plate.

The first portion may be in contact with the lid plate. The second portion may be in contact with the base sheet.

The venting sheet may have a corrugated structure.

The battery pack may further include a fire-resistant film on a surface of the cover facing the battery cell assembly. The fire-resistant film may overlap with the first and second cover holes of the cover in a direction perpendicular to the mounting surface of the bottom plate.

The battery pack may further include side walls between the bottom plate and the lid plate. At least one of the side walls may include a venting hole.

### [Advantageous Effects]

According to exemplary embodiments of the present disclosure, by providing a venting guide structure in the battery pack, a venting path inside the battery pack can be guided and heat propagation to adjacent battery cells can be prevented. Thereby, thermal runaway of the battery pack can be prevented and safety can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is an exploded perspective view of a battery pack according to exemplary embodiments.
FIG. 2 is an exploded perspective view of a battery pack according to exemplary embodiments.
FIG. 3 is a top view of a cover according to exemplary embodiments.
FIG. 4 is a top view of a base sheet according to exemplary embodiments.
FIG. 5 is a top view of a venting sheet according to exemplary embodiments.
FIG. 6 is a perspective view of a venting sheet according to exemplary embodiments.
FIG. 7 is a cross-sectional view of a battery pack according to exemplary embodiments.
FIG. 8 is a cross-sectional view of a battery pack according to exemplary embodiments.
FIG. 9 is a cross-sectional view of a battery pack according to exemplary embodiments.
FIG. 10 is a cross-sectional view of a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First and second embodiments)

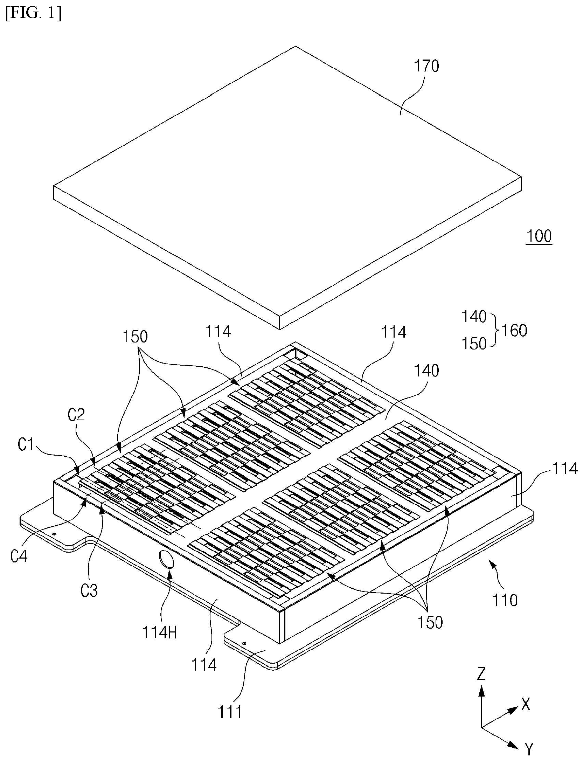

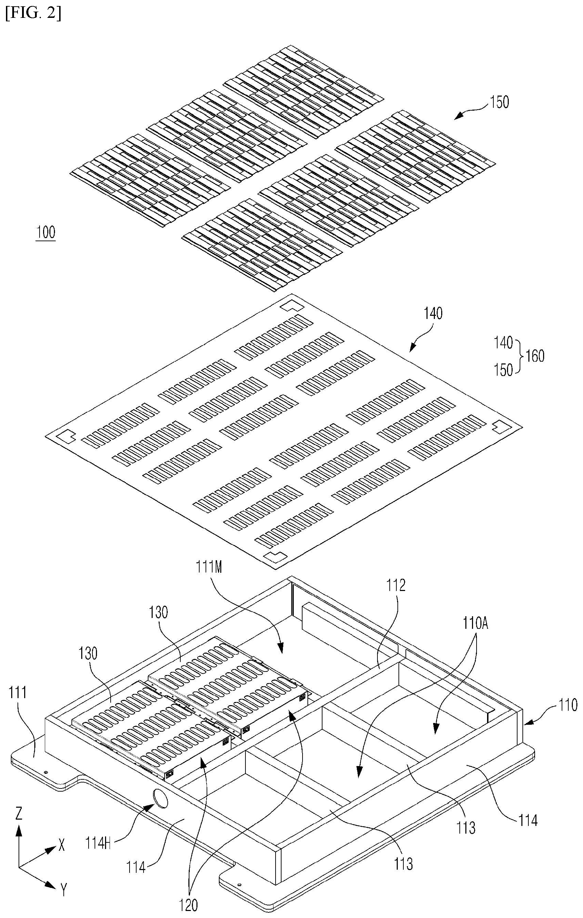

FIGS. 1 and 2 are perspective views showing a battery pack 100 according to exemplary embodiments. The lid plate 170 of the battery pack 100 is omitted in FIG. 2.

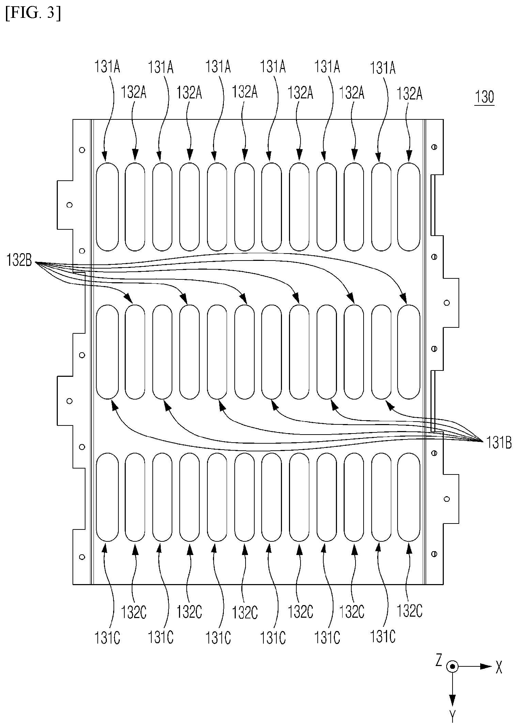

FIG. 3 is a top view showing the cover 130.

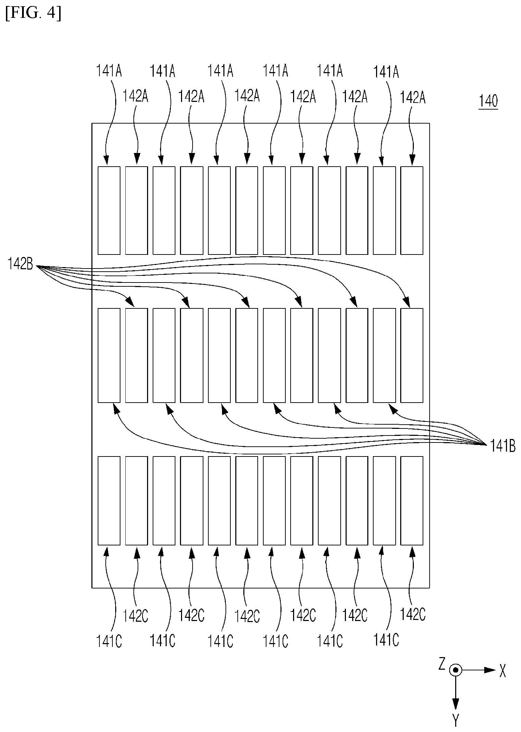

FIG. 4 is a top view showing the base sheet 140. FIG. 4 shows the base sheet 140 in a region overlapping with one of the battery cell assemblies 120.

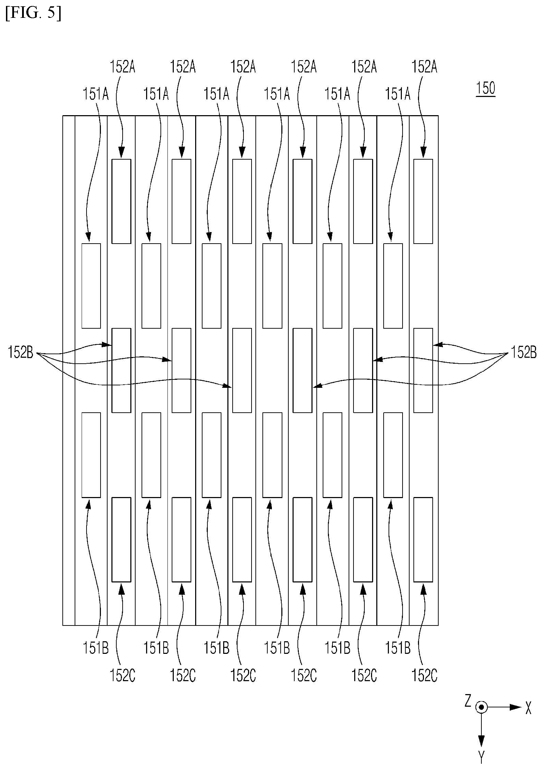

FIG. 5 is a top view showing the venting sheet 150.

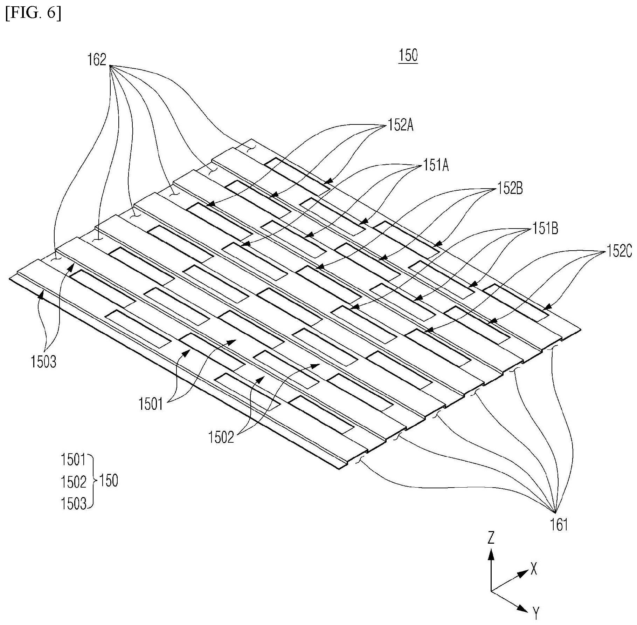

FIG. 6 is a perspective view showing the venting sheet 150.

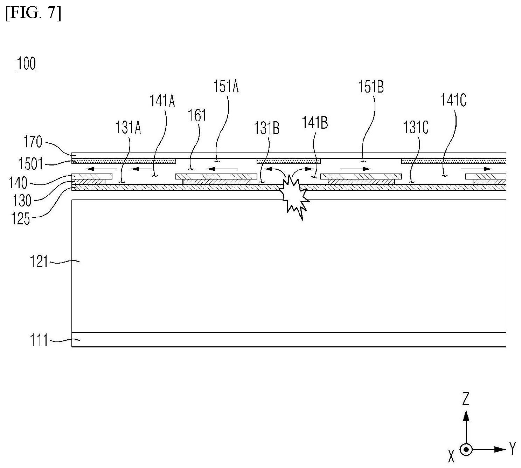

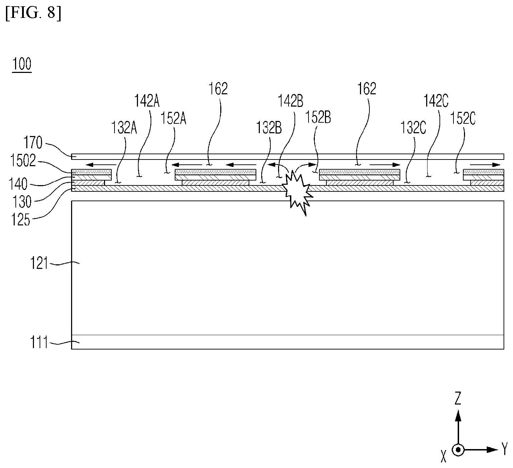

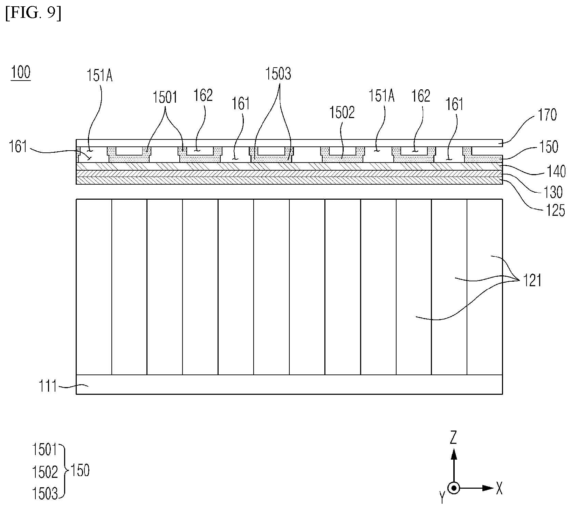

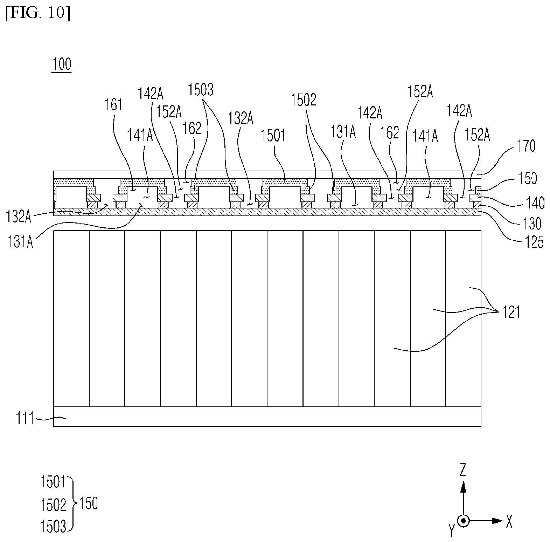

FIGS. 7 to 10 are cross-sectional views showing the battery pack 100. FIG. 7 shows a cross-section along C1 of FIG. 1. FIG. 8 shows a cross-section along C2 of FIG. 1. FIG. 9 shows a cross-section along C3 of FIG. 1. FIG. 10 shows a cross-section along C4 of FIG. 1. In FIGS. 7 and 8, arrows without reference numbers indicate the movement of combustion by-products.

Referring first to FIGS. 1 and 2, the battery pack 100 may include a pack housing 110, battery cell assemblies 120, a cover 130, a venting guide structure 160, and a lid plate 170.

The pack housing 110 may provide accommodation spaces 110A capable of accommodating each of the battery cell assemblies 120. The pack housing 110 may include a bottom plate 111, a center beam 112, cross beams 113, and side walls 114.

The bottom plate 111 may support the battery cell assemblies 120 at the lower part in the Z direction. The battery cell assemblies 120 may be mounted on a mounting surface 111M of the bottom plate 111.

Two directions substantially parallel to the mounting surface 111M of the bottom plate 111 are defined as the X direction and the Y direction, and a direction substantially perpendicular to the mounting surface 111M of the bottom plate 111 is defined as the Z direction. Each of the X direction, Y direction, and Z direction may be substantially perpendicular to each other. Unless otherwise specified, the definition of directions is the same for the following drawings.

The center beam 112 may extend in the X direction. The center beam 112 may be at the center of the bottom plate 111. The cross beams 113 may extend in the Y direction. Each of the cross beams 113 may be in contact with the center beam 112. The center beam 112 may separate the battery cell assemblies 120 mounted inside the pack housing 110 in the Y direction. Each of the cross beams 113 may separate the battery cell assemblies mounted inside the pack housing 110 in the X direction.

The side walls 114 may horizontally surround the center beam 112 and the cross beams 113. Each of the side walls 114 may be substantially perpendicular to the bottom plate 111. Each of the side walls 114 may be located on an edge of the bottom plate 111. At least one of the side walls 114 may include a venting hole 114H. The number of venting holes 114H may be one or more. Combustion by-products generated inside the pack housing 110 may be discharged to the outside of the pack housing 110 through the venting hole 114H of the side wall 114A. Combustion by-products may include high-temperature gas, sparks, heat, particles, and flames.

Each of the battery cell assemblies 120 may include battery cells 121 (see FIGS. 7 to 10).

A plurality of battery cells 121 may be arranged in the X direction. According to exemplary embodiments, each of the plurality of battery cells 121 may be bidirectional cells. That is, a positive terminal of each of the plurality of battery cells 121 may be disposed at one end of each, and a negative terminal of each of the plurality of battery cells 121 may be disposed at the other end of each. Those skilled in the art will readily arrive at embodiments in which each of the plurality of battery cells 121 is a unidirectional cell based on what is described herein.

Each of the plurality of battery cells 121 includes an electrode assembly, an electrolyte, and a case covering them. The case may be a pouch-type case or a prismatic-type case. The pouch-type case may include an aluminum laminate sheet. The prismatic-type case may include a metallic material such as aluminum. The prismatic-type case may have a rectangular prism shape.

The electrode assembly embedded in the case may include a positive electrode, a negative electrode, and a separator interposed between the positive electrode and the negative electrode. The electrode assembly may be either a jelly-roll type or a stack-type depending on the assembly form. A jelly-roll type electrode assembly may include a wound structure of a positive electrode, a negative electrode, and a separator interposed therebetween. A stack-type electrode assembly may include a plurality of positive electrodes, a plurality of negative electrodes sequentially stacked, and a plurality of separators interposed therebetween.

Each of the battery cell assemblies 120 may further include separators (not shown). The separators may separate the battery cells 121. The separators may be interposed between the battery cells 121.

The plurality of separators may include a compressible material. The plurality of separators may absorb swelling of the plurality of battery cells 121. The plurality of separators may be thermal barriers. According to exemplary embodiments, each of the plurality of separators may have a high melting temperature and low thermal conductivity. According to exemplary embodiments, each of the plurality of separators may include a flame-retardant material such as ceramic and coated glass material. According to exemplary embodiments, the plurality of separators may be configured to release a fire retarding material and fire extinguishing agent when a thermal runaway event occurs.

According to exemplary embodiments, the battery cells 121 of each of the battery cell assemblies 120 may be accommodated in a module frame and mounted in the accommodation spaces 110A of the pack housing 110. According to other exemplary embodiments, each of the battery cell assemblies 120 may be accommodated in the accommodation spaces 110A of the pack housing 110 without being accommodated in a module frame. That is, the battery pack 100 may be a module-less type (or cell-to-pack structure).

The cover 130 may be on each of the battery cell assemblies 120. Referring to FIG. 3 together, the cover 130 may include first cover holes 131A, 131B, 131C and second cover holes 132A, 132B, 132C.

The first cover holes 131A, 131B, 131C may be arranged in the Y direction. The first cover holes 131A, 131B, 131C may be spaced apart from each other in the Y direction. The length of each of the first cover holes 131A, 131B, 131C in the X direction may be different from the length of each of the first cover holes 131A, 131B, 131C in the Y direction. The length of each of the first cover holes 131A, 131B, 131C in the X direction may be smaller than the length of each of the first cover holes 131A, 131B, 131C in the Y direction.

The second cover holes 132A, 132B, 132C may be arranged in the Y direction. The second cover holes 132A, 132B, 132C may be spaced apart from each other in the Y direction. The length of each of the second cover holes 132A, 132B, 132C in the X direction may be different from the length of each of the second cover holes 132A, 132B, 132C in the Y direction. The length of each of the second cover holes 132A, 132B, 132C in the X direction may be smaller than the length of each of the second cover holes 132A, 132B, 132C in the Y direction.

The first cover holes 131A, 131B, 131C may be spaced apart from the second cover holes 132A, 132B, 132C in the X direction. The first cover hole 131A may be aligned with the second cover hole 132A in the X direction. The first cover hole 131A may be spaced apart from the second cover hole 132A in the X direction. The first cover hole 131B may be aligned with the second cover hole 132B in the X direction. The first cover hole 131B may be spaced apart from the second cover hole 132B in the X direction. The first cover hole 131C may be aligned with the second cover hole 132C in the X direction. The first cover hole 131C may be spaced apart from the second cover hole 132C in the X direction.

According to exemplary embodiments, the first cover holes 131A, 131B, 131C may overlap with a corresponding one of the plurality of battery cells 121 (see FIGS. 7 to 10) in the Z direction. According to exemplary embodiments, the second cover holes 132A, 132B, 132C may overlap with a corresponding one of the plurality of battery cells 121 in the Z direction. However, the present disclosure is not limited thereto, and the first cover holes 131A, 131B, 131C may overlap with two or more of the plurality of battery cells 121 in the Z direction. The second cover holes 132A, 132B, 132C may overlap with two or more of the plurality of battery cells 121 in the Z direction.

FIG. 3 shows an embodiment in which each of the first cover holes 131A, 131B, 131C and the second cover holes 132A, 132B, 132C is three in number, but the number of the first cover holes 131A, 131B, 131C and the second cover holes 132A, 132B, 132C is not limited thereto. The number of the first cover holes 131A, 131B, 131C and the second cover holes 132A, 132B, 132C may be changed according to the size or number of the battery cells 121 (see FIGS. 7 to 10).

In the case of the battery pack 100 in which the battery cells 121 are accommodated in a module frame, the cover 130 may be a top plate of the module frame. Here, the top plate of the module frame means a plate that covers the battery cells 121 at the upper part in the Z direction.

Referring to FIGS. 1, 2, and 4 to 6 together, the venting guide structure 160 may include a base sheet 140 and a plurality of venting sheets 150.

The base sheet 140 may be on the cover 130. The base sheet 140 may be in contact with the cover 130. The base sheet 140 may overlap with the plurality of battery cell assemblies 120 in the Z direction.

FIG. 4 shows a region of the base sheet 140 overlapping with one of the battery cell assemblies 120. The following description may be applied equally or similarly to other regions of the base sheet 140 overlapping with each of the other battery cell assemblies 120.

Referring to FIG. 4, the base sheet 140 may include first communication holes 141A, 141B, 141C and second communication holes 142A, 142B, 142C.

The first communication holes 141A, 141B, 141C may be arranged in the Y direction. The first communication holes 141A, 141B, 141C may be spaced apart from each other in the Y direction. The length of each of the first communication holes 141A, 141B, 141C in the X direction may be different from the length of each of the first communication holes 141A, 141B, 141C in the Y direction. The length of each of the first communication holes 141A, 141B, 141C in the X direction may be smaller than the length of each of the first communication holes 141A, 141B, 141C in the Y direction.

The second communication holes 142A, 142B, 142C may be arranged in the Y direction. The second communication holes 142A, 142B, 142C may be spaced apart from each other in the Y direction. The length of each of the second communication holes 142A, 142B, 142C in the X direction may be different from the length of each of the second communication holes 142A, 142B, 142C in the Y direction. The length of each of the second communication holes 142A, 142B, 142C in the X direction may be smaller than the length of each of the second communication holes 142A, 142B, 142C in the Y direction.

The first communication holes 141A, 141B, 141C may be spaced apart from the second communication holes 142A, 142B, 142C in the X direction. The first communication hole 141A may be aligned with the second communication hole 142A in the X direction. The first communication hole 141A may be spaced apart from the second communication hole 142A in the X direction. The first communication hole 141B may be aligned with the second communication hole 142B in the X direction. The first communication hole 141B may be spaced apart from the second communication hole 142B in the X direction. The first communication hole 141C may be aligned with the second communication hole 142C in the X direction. The first communication hole 141C may be spaced apart from the second communication hole 142C in the X direction.

Each of the first communication holes 141A, 141B, 141C may overlap with each of the first cover holes 131A, 131B, 131C in the Z direction. The first communication hole 141A may overlap with the first cover hole 131A in the Z direction. The first communication hole 141B may overlap with the first cover hole 131B in the Z direction. The first communication hole 141C may overlap with the first cover hole 131C in the Z direction.

Each of the second communication holes 142A, 142B, 142C may overlap with each of the second cover holes 132A, 132B, 132C in the Z direction. The second communication hole 142A may overlap with the second cover hole 132A in the Z direction. The second communication hole 142B may overlap with the second cover hole 132B in the Z direction. The second communication hole 142C may overlap with the second cover hole 132C in the Z direction.

Referring to FIGS. 1, 2, and 5 to 6, the venting sheet 150 may be at the upper part of the base sheet 140 in the Z direction. The venting sheet 150 may be in contact with the base sheet 140. The venting sheet 150 may be at the lower part the lid plate 170 in the Z direction. The venting sheet 150 may be in contact with the lid plate 170. The venting sheet 150 may overlap with each of the battery cell assemblies 120 in the Z direction.

Referring to FIGS. 5, 6, 9, and 10 together, the venting sheet 150 may have a corrugated structure. The venting sheet 150 may include a first portion 1501, a second portion 1502, and a third portion 1503.

The first portion 1501 may be spaced apart from the base sheet 140 in the Z direction. The first portion 1501 may be in contact with the lid plate 170. The first portion 1501 may be substantially parallel to the base sheet 140. The first portion 1501 may be substantially parallel to the bottom plate 111. The first portion 1501 may overlap with a corresponding one of the plurality of battery cells 121 in the Z direction.

The second portion 1502 may be in contact with the base sheet 140. The second portion 1502 may be spaced apart from the lid plate 170 in the Z direction. The second portion 1502 may be substantially parallel to the base sheet 140. The second portion 1502 may be substantially parallel to the bottom plate 111. The second portion 1502 may overlap with a corresponding one of the plurality of battery cells 121 in the Z direction.

The third portion 1503 may connect the first portion 1501 and the second portion 1502. The third portion 1503 may be between the first portion 1501 and the second portion 1502. The third portion 1503 may be substantially perpendicular to the X direction. The third portion 1503 may be oblique to the X direction.

The venting guide structure 160 may include a first venting passage 161 and a second venting passage 162.

Referring to FIGS. 6, 7, 9, and 10 together, the first venting passage 161 may be between the base sheet 140 and the first portion 1501 of the venting sheet 150. The first venting passage 161 may be defined by the base sheet 140, adjacent third portions 1503, and the first portion 1501. The first venting passage 161 may extend in the Y direction. The first venting passage 161 may overlap with a corresponding one of the plurality of battery cells 121 in the Z direction.

The first venting passage 161 may communicate with each of the first cover holes 131A, 131B, 131C. The first communication holes 141A, 141B, 141C may connect the first venting passage 161 and the first cover holes 131A, 131B, 131C. The first communication hole 141A may connect the first venting passage 161 and the first cover hole 131A. The first communication hole 141B may connect the first venting passage 161 and the first cover hole 131B. The first communication hole 141C may connect the first venting passage 161 and the first cover hole 131C.

Referring to FIGS. 6 and 8 to 10 together, the second venting passage 162 may be between the second portion 1502 of the venting sheet 150 and the lid plate 170. The second venting passage 162 may be defined by the second portion 1502, adjacent third portions 1503, and the lid plate 170. The second venting passage 162 may extend in the Y direction. The second venting passage 162 may overlap with a corresponding one of the plurality of battery cells 121 in the Z direction.

The second venting passage 162 may communicate with each of the second cover holes 132A, 132B, 132C. The second communication holes 142A, 142B, 142C and the second venting holes 152A, 152B, 152C may connect between the second venting passage 162 and the second cover holes 132A, 132B, 132C. The second communication hole 142A and the second venting hole 152A may connect the second venting passage 162 and the second cover hole 132A. The second communication hole 142B and the second venting hole 152B may connect the second venting passage 162 and the second cover hole 132B. The second communication hole 142C and the second venting hole 152C may connect the second venting passage 162 and the second cover hole 132C.

As shown in FIGS. 6, 9, and 10, the first venting passage 161 and the second venting passage 162 may be separated in the X direction by the third portion 1503. Due to this, combustion by-products flowing through one of the first and second venting passages 161, 162 may not flow into the adjacent venting passages 161, 162. That is, heat propagation from one of the battery cells 121 to the remaining battery cells 121 due to ignition can be prevented or delayed. Thereby, thermal runaway of the battery pack 100 can be prevented or delayed, and the safety of the battery pack 100 can be improved.

The venting sheet 150 may include first venting holes 151A, 151B and second venting holes 152A, 152B, 152C.

The first venting holes 151A, 151B may be formed in the first portion 1501 of the venting sheet 150. Each of the first venting holes 151A, 151B may communicate with the first venting passage 161.

The first venting holes 151A, 151B may be arranged in the Y direction. The first venting holes 151A, 151B may be spaced apart from each other in the Y direction. The length of each of the first venting holes 151A, 151B in the X direction may be different from the length of each of the first venting holes 151A, 151B in the Y direction. The length of each of the first venting holes 151A, 151B in the X direction may be smaller than the length of each of the first venting holes 151A, 151B in the Y direction.

Each of the first venting holes 151A, 151B may not overlap with each of the first communication holes 141A, 141B, 141C in the Z direction. The first venting hole 151A may overlap with the base sheet 140 between the first communication hole 141A and the first communication hole 141B in the Z direction. The first venting hole 151B may overlap with the base sheet 140 between the first communication hole 141B and the first communication hole 141C in the Z direction.

The second venting holes 152A, 152B, 152C may be formed in the second portion 1502 of the venting sheet 150. Each of the second venting holes 152A, 152B, 152C may communicate with the second venting passage 162.

The second venting holes 152A, 152B, 152C may be arranged in the Y direction. The second venting holes 152A, 152B, 152C may be spaced apart from each other in the Y direction. The length of each of the second venting holes 152A, 152B, 152C in the X direction may be different from the length of each of the second venting holes 152A, 152B, 152C in the Y direction. The length of each of the second venting holes 152A, 152B, 152C in the X direction may be smaller than the length of each of the second venting holes 152A, 152B, 152C in the Y direction.

Each of the second venting holes 152A, 152B, 152C may overlap with each of the second communication holes 142A, 142B, 142C in the Z direction. The second venting hole 152A may overlap with the second communication hole 142A in the Z direction. The second venting hole 152B may overlap with the second communication hole 142B in the Z direction. The second venting hole 152C may overlap with the second communication hole 142C in the Z direction.

The number of the first venting holes 151A, 151B may be different from the number of the second venting holes 152A, 152B, 152C. The number of the first venting holes 151A, 152B may be smaller than the number of the second venting holes 152A, 152B, 152C. Each of the first venting holes 151A, 151B may not overlap with each of the second venting holes 152A, 152B, 153C in the X direction.

The lid plate 170 may be on the venting guide structure 160. The lid plate 170 may cover the plurality of battery cell assemblies 120. The lid plate 170 may be coupled to the side walls 114 by bolting or the like.

Referring to FIGS. 7 to 10 together, the battery pack 100 may further include a fire-resistant film 125.

The fire-resistant film 125 may be between each of the battery cell assemblies 120 and the cover 130. The fire-resistant film 125 may be on a surface of the cover 130 facing each of the battery cell assemblies 120. The fire-resistant film 125 may overlap with the battery cells 121 of each of the battery cell assemblies 120 in the Z direction.

The fire-resistant film 125 may overlap with the first cover holes 131A, 131B, 131C and the second cover holes 132A, 132B, 132C of the cover 130 in the Z direction. According to exemplary embodiments, the fire-resistant film 125 may cover the entire surface of the cover 130 facing each of the battery cell assemblies 120.

The fire-resistant film 125 may include a fire-resistant material. As a nonlimiting embodiment, the fire-resistant film 125 may include any one of polyimide, polyvinylidene fluoride (PVDF), and polytetrafluoroethylene (PTFE). As a nonlimiting embodiment, the fire-resistant film 125 may be a ceramic coated film.

The fire-resistant film 125 may have a melting temperature prepared for a fire event of the battery pack 100. According to exemplary embodiments, the melting temperature of the fire-resistant film 125 may be about 150°C or higher. According to exemplary embodiments, the melting temperature of the fire-resistant film 125 may be about 250°C or higher. According to exemplary embodiments, the melting temperature of the fire-resistant film 125 may be about 350°C or higher. According to exemplary embodiments, the melting temperature of the fire-resistant film 125 may be about 500°C or higher. According to exemplary embodiments, the melting temperature of the fire-resistant film 125 may be about 700°C or higher.

The fire-resistant film 125 may be configured to rupture at a location overlapping with the accommodation space when the pressure of the accommodation space of the battery cells 121 rises above a reference pressure.

For example, as shown in FIG. 7, when a fire event occurs in one of the battery cells 121, the pressure of the accommodation space of the battery cells 121 may increase. Due to this, the fire-resistant film 125 in a region overlapping with the first cover hole 131B and the first communication hole 141B in the Z direction may be ruptured. Combustion by-products (for example, high-temperature gas, sparks, heat, particles, and flames) may pass through the ruptured fire-resistant film 125 and move to the first venting passage 161. The combustion by-products may move along the Y direction within the first venting passage 161. The moved combustion by-products may be discharged to the outside of the battery pack 100 through the venting hole 114H (see FIGS. 1 and 2) of the side walls 114 (see FIGS. 1 and 2) of the pack housing 110 (see FIGS. 1 and 2). That is, a venting path for combustion by-products can be guided.

At this time, the fire-resistant film 125 may not be ruptured in a region overlapping with the first cover hole 131A and the first communication hole 141A in the Z direction and in a region overlapping with the first cover hole 131C and the first communication hole 141C in the Z direction. Accordingly, reverse inflow of combustion by-products that have moved to the first venting passage 161 into the battery cell 121 through the first cover holes 131A, 131C and the first communication holes 141A, 141C can be prevented. That is, heat propagation from a specific region of the battery cell 121 to an adjacent region can be prevented or delayed. Thereby, thermal runaway of the battery pack 100 can be prevented or delayed, and the safety of the battery pack 100 can be improved.

Also, as shown in FIG. 7, the lid plate 170 may be in contact with the first portion 1501 of the venting sheet 150 in a region overlapping with the first cover hole 131B and the first communication hole 141B in the Z direction. That is, each of the first venting holes 151A, 151B of the first portion 1501 of the venting sheet 150 may not overlap with each of the first cover holes 131A, 131B, 131C and each of the first communication holes 141A, 141B, 141C in the Z direction. Accordingly, combustion by-products discharged from the first cover hole 131B and the first communication hole 141B can be prevented from being directly exposed to the lid plate 170. Thereby, damage to the lid plate 170 can be prevented or mitigated.

Similarly, referring to FIG. 8, when a fire event occurs in one of the battery cells 121, the pressure of the accommodation space of the battery cells 121 may increase. Due to this, the fire-resistant film 125 in a region overlapping with the second cover hole 132B and the second communication hole 142B in the Z direction may be ruptured. Combustion by-products may move to the second venting passage 162 through the ruptured fire-resistant film 125. The combustion by-products may move along the Y direction within the second venting passage 162. The moved combustion by-products may be discharged to the outside of the battery pack 100 through the venting hole 114H (see FIGS. 1 and 2) of the side walls 114 (see FIGS. 1 and 2) of the pack housing 110 (see FIGS. 1 and 2).

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a bottom plate;
a battery cell assembly on the bottom plate comprising a plurality of battery cells arranged in a first direction;
a cover on the battery cell assembly;
a venting guide structure comprising a base sheet on the cover and a venting sheet on the base sheet; and
a lid plate on the venting guide structure, wherein
the venting guide structure comprises:
a first venting passage between the base sheet and the venting sheet; and
a second venting passage between the venting sheet and the lid plate, wherein
the first venting passage and the second venting passage are separated in the first direction.

2. The battery pack of claim 1, wherein
each of the first venting passage and the second venting passage extends in a second direction that is parallel to a mounting surface of the bottom plate and perpendicular to the first direction.

3. The battery pack of claim 1, wherein
the cover comprises:
a plurality of first cover holes arranged in a second direction parallel to a mounting surface of the bottom plate and perpendicular to the first direction; and
a plurality of second cover holes arranged in the second direction and spaced apart from the plurality of first cover holes in the first direction.

4. The battery pack of claim 3, wherein
each of the plurality of first cover holes overlaps with a corresponding one of the plurality of battery cells in a third direction perpendicular to each of the first and second directions, and
each of the plurality of second cover holes overlaps with a corresponding one of the plurality of battery cells in the third direction.

5. The battery pack of claim 3, wherein
the base sheet comprises first communication holes and second communication holes,
each of the first communication holes overlaps with a corresponding one of the first cover holes in a third direction perpendicular to each of the first and second directions, and
each of the second communication holes overlaps with a corresponding one of the second cover holes in the third direction.

6. The battery pack of claim 5, wherein
the venting sheet comprises:
first venting holes communicating with the first venting passage, and
second venting holes communicating with the second venting passage.

7. The battery pack of claim 6, wherein
each of the first venting holes overlaps with the base plate between two adjacent ones of the first communication holes in the third direction, and
each of the second venting holes overlaps with a corresponding one of the second communication holes in the third direction.

8. The battery pack of claim 6, wherein
the number of the first venting holes is different from the number of the second venting holes.

9. The battery pack of claim 1, wherein
the venting sheet comprises:
a first portion spaced apart from the base sheet in a direction perpendicular to a mounting surface of the bottom plate;
a second portion in contact with the base sheet; and
a third portion connecting the first portion and the second portion.

10. The battery pack of claim 9, wherein
the first venting passage and the second venting passage are separated in the first direction by the third portion.

11. The battery pack of claim 9, wherein
the first venting passage overlaps with the first portion in a direction perpendicular to the mounting surface of the bottom plate, and
the second venting passage overlaps with the second portion in a direction perpendicular to the mounting surface of the bottom plate.

12. The battery pack of claim 9, wherein
the first portion is in contact with the lid plate, and
the second portion is in contact with the base sheet.

13. The battery pack of claim 1, wherein
the venting sheet has a corrugated structure.

14. The battery pack of claim 1, further comprising:
a fire-resistant film on a surface of the cover facing the battery cell assembly, wherein
the fire-resistant film overlaps with the first and second cover holes of the cover in a direction perpendicular to the mounting surface of the bottom plate.

15. The battery pack of claim 1, further comprising:
side walls between the bottom plate and the lid plate, wherein at least one of the side walls comprises a venting hole.
